(19) Europäisches Patentamt
European Patent Office
Office européen des brevets

(11) **EP 3 235 088 B1**

(12) **EUROPÄISCHE PATENTSCHRIFT**

(45) Veröffentlichungstag und Bekanntmachung des Hinweises auf die Patenterteilung:
**12.01.2022   Patentblatt 2022/02**

(21) Anmeldenummer: **15705924.7**

(22) Anmeldetag: **02.02.2015**

(51) Int Cl.:
*H02H 3/06* *(2006.01)*       *H02J 3/00* *(2006.01)*
*H02J 3/36* *(2006.01)*       *H02H 7/22* *(2006.01)*
*H02H 1/00* *(2006.01)*       *H02H 7/26* *(2006.01)*

(86) Internationale Anmeldenummer:
**PCT/EP2015/052063**

(87) Internationale Veröffentlichungsnummer:
**WO 2016/124215 (11.08.2016 Gazette 2016/32)**

(54) **VERFAHREN UND ANORDNUNG ZUM ÜBERTRAGEN ELEKTRISCHER ENERGIE ÜBER EINE ELEKTRISCHE LEITUNG**

METHOD AND ARRANGEMENT FOR TRANSMITTING ELECTRIC ENERGY VIA AN ELECTRIC LINE

PROCÉDÉ ET ENSEMBLE DE TRANSMISSION D'UNE ÉNERGIE ÉLECTRIQUE PAR L'INTERMÉDIAIRE D'UNE LIGNE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.10.2017   Patentblatt 2017/43**

(73) Patentinhaber: **Siemens Energy Global GmbH & Co. KG**
**81739 München (DE)**

(72) Erfinder:
• **EICHHOFF, Daniel**
  **58313 Herdecke (DE)**
• **NIKOLIC, Paul Gregor**
  **53881 Euskirchen (DE)**
• **PETINO, Cora**
  **52064 Aachen (DE)**
• **SCHNETTLER, Armin**
  **52076 Aachen (DE)**

(56) Entgegenhaltungen:
WO-A1-2013/174726       US-A- 5 805 400
US-A1- 2013 218 359     US-A1- 2014 049 865

• **None**

EP 3 235 088 B1

**Beschreibung**

Die Erfindung bezieht sich auf ein Verfahren zum Übertragen elektrischer Energie über eine elektrische Leitung, wobei im Falle eines Lichtbogenfehlers auf der Leitung eine Nothandlung zur Beendigung des Lichtbogenfehlers vorgenommen wird und nach Beendigung des Lichtbogenfehlers mit einer mit der Leitung in Verbindung stehenden Spannungsquelle wieder eine vorgegebene Betriebsspannung an die elektrische Leitung angelegt wird.

In der Übertragung elektrischer Energie gewinnt die Hochspannungs-Gleichstrom-Technologie (HVDC - high voltage direct current) zunehmend an Bedeutung, da sie gegenüber der konventionellen Drehstrom-Technologie eine Vielzahl von Vorteilen besitzt. HVDC-Systeme unter der Verwendung von Freileitungen bzw. Kabeln werden dabei zur Leistungsübertragung in der Größenordnung einiger hundert Megawatt eingesetzt. Als Anwendungsbeispiele sind Anbindungen von Offshore-Windparks oder die Kopplung schwacher Drehstromnetze durch HVDC-Verbindungen über mehrere hundert Kilometer sowie die im Rahmen der Energiewende in Deutschland geplanten Nord-Süd-Trassen zu nennen [6]. Die HVDC-Verbindungen sind zumeist als Punkt-zu-Punkt-Verbindungen über entsprechende Umrichterstationen in das Übertragungsnetz eingebunden und dienen dabei insbesondere zum Transport der elektrischen Energie von den lastfernen Erzeugungszentren auf Grundlage erneuerbarer Energiequellen (Wasser, On- und Offshore-Wind) zu den Lastzentren. Sie stellen somit zentrale Elemente für das Übertragungsnetz dar, deren plötzlicher Ausfall und die dadurch hervorgerufene Störung im Leistungsgleichgewicht des gesamten Netzes unter Umständen gravierende Auswirkungen auf die Systemstabilität haben kann.

Derartige Ausfälle werden in Freileitungssystemen z. B. durch Isolationsfehler hervorgerufen, die durch dielektrisches Versagen des gasförmigen Isoliermediums (z. B. Luft) in Folge von inneren oder äußeren Überspannungen (z. B. Blitzeinschläge) oder durch fremde, äußere Einwirkungen (z. B. Bäume o. ä.) entstehen können, die eine elektrische Verbindung zwischen aktiven Leitern untereinander und/oder Erde herstellen. Sie lassen sich daher in realen Systemen nicht vollständig ausschließen. Je länger der Fehler andauert, d. h. je länger die Leistungsübertragung unterbrochen ist, umso gravierender sind die Auswirkungen auf das Netz und dessen Stabilität. Zudem können in Form von Leistungspendelungen weitere Störungen der Netzstabilität entstehen. Aus diesem Grund ist es vorteilhaft, durch geeignete technische Verfahren die Leistungsübertragung nach Isolationsfehlern schnellstmöglich wieder herzustellen.

Nach der Lichtbogenlöschung ist die Isolationsfestigkeit der betroffenen Isolationsstrecke aufgrund der hohen thermischen Vorbelastung kurzzeitig herabgesetzt [4]. Erst nach den Deionisations- und Wiederverfestigungsprozessen ist eine erneute Spannungsbelastung der Isolationsstrecke möglich. Erfolgt das Wiedereinschalten zu früh, kann es zu einem erneuten Isolationsversagen und einer Rückzündung des Lichtbogens kommen [1-5].

Der prinzipielle Prozess bei Auftreten eines Lichtbogens lässt sich in folgende Phasen unterteilen:

1. Phase:    Kurzschluss / Überspannung
2. Phase:    Ionisation des Isoliergases durch Spannungs- bzw. Feldüberhöhung
3. Phase:    Bildung eines Lichtbogens
4. Phase:    Stark ansteigender Stromfluss auf der Leitung innerhalb weniger Millisekunden
5. Phase:    Isolationsfestigkeit der Isolationsstrecke (Luft im Falle einer Freileitung) aufgrund von Teilionisation auch nach Verlöschen des Lichtbogens und Stromunterbrechung kurzzeitig herabgesetzt
6. Phase:    Anschließend erfolgt Deionisations- und Wiederverfestigungsprozess des Isoliermediums
7. Phase:    Wiedereinschalten

Die Unterbrechungsdauer $t_{Out}$ der Leistungsübertragung kann in mehrere Zeitabschnitte unterteilt werden, gemäß

$$t_{Out} = t_{FCR} + t_{Int} + t_{Rec} + t_{Res}$$

wobei $t_{Out}$ die Unterbrechungsdauer, $t_{FCR}$ die Zeitspanne des Fehlerstromanstiegs, $t_{Int}$ die Stromunterbrechungszeit, $t_{Rec}$ die Zeitdauer der dielektrischen Wiederverfestigung und $t_{Res}$ die Anfahrdauer des Systems bezeichnen.

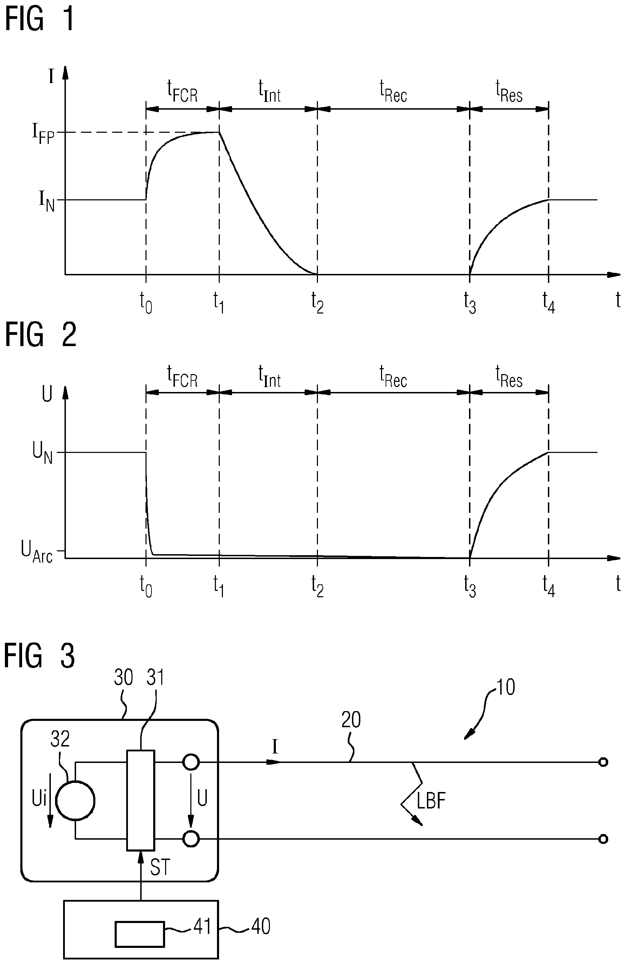

Diese Zeitabschnitte sind in Figur 1 schematisch anhand eines typischen Fehlerstromverlaufes auf einer Freileitung dargestellt, wobei I den Strom, t die Zeit, $I_N$ den Nennstrom und $I_{FP}$ den Fehlerstrom durch den Lichtbogen bezeichnen.

Der korrespondierende typische Spannungsverlauf ist in der Fig. 2 gezeigt; es lässt sich erkennen, dass die Betriebsspannung $U_N$ erst nach Ablauf der Zeitdauer der dielektrischen Wiederverfestigungszeit $t_{Rec}$ eingeschaltet wird. $U_{Arc}$ kennzeichnet in Fig. 2 die Lichtbogenspannung.

Nach Unterbrechung des Fehlerstroms, d. h. nach dem Verlöschen des Lichtbogens, benötigt die thermisch belastete Isolationsstrecke die Zeit $t_{Rec}$ für die vollständige dielektrische Wiederverfestigung. Diese Wiederverfestigungsdauer stellt während des gesamten Prozesses oftmals die dominierende Größe dar. Die Dauer ist dabei nicht konstant, sondern hängt von einer Vielzahl von Parametern ab, wie z. B. [5]:

- Fehlerstromamplitude des Lichtbogens
- Fehlerstrom- bzw. Lichtbogenbrenndauer
- Impedanz im Fehlerstrompfad

- Isolationsabstände
- Lokale Rahmenbedingungen

In heutzutage im Einsatz befindlichen Hochspannungswechselstrom-Systemen (AC) wird im Fall eines Isolationsversagens im Freileitungsbereich eine sogenannte Kurzunterbrechung (KU) durchgeführt. Dabei werden nach Detektion eines Erdfehlers durch den Netzschutz automatisch die Leistungsschalter der betroffenen Leitung ausgelöst, um somit durch das Freischalten den Fehler zu löschen. Diese Unterbrechung geschieht für ca. 0,4 s [7], da anschließend eine automatische Wiedereinschaltung (AWE) durch die beteiligten Leistungsschalter erfolgt. Da in AC-Systemen die Systemspannung nicht geregelt, sondern nur unmittelbar in voller Amplitude aufgeschaltet werden kann, muss sichergestellt sein, dass zum Zeitpunkt der Wiedereinschaltung auch bereits eine vollständige Wiederverfestigung erfolgt ist. Daher ist die Dauer der Unterbrechung so festgelegt, dass mit einer hohen Wahrscheinlichkeit von einem Verlöschen ausgegangen werden kann (sichere Abschätzung nach oben). Der gesamte Vorgang stellt somit für das betroffene Hochspannungsnetz einen erheblichen Eingriff in die Netzstabilität dar, da der Leistungsfluss über die betroffene Leitung für eine beträchtliche Dauer unterbrochen ist.

Aus der internationalen Patentanmeldung WO 2013/174726 A1 ist ein Verfahren zur Fehlerbeseitigung bekannt, bei dem nach Verstreichen einer "re-close time" ein fehlerbedingt geöffneter DC-Leistungsschalter wieder geschlossen wird und danach die über die DC-Leitung übertragene DC-Leistung so eingestellt wird, dass diese DC Leistung zunächst geringer ist als die vor dem Fehler übertragene DC-Leistung.

Die Patentanmeldung US 2014/049865 A1 offenbart ein Verfahren zum Wiedereinschalten eines Energienetzes nach einem Fehler mittels eines sogenannten Ramp-Up-Prozesses.

Die Patentschrift US 5,805,400 offenbart eine elektronische Vorrichtung zur Bewertung einer transienten Stabilitätsspanne eines Stromnetzes unter Nutzung eines neuronalen Netzes. Nach einem Fehler schließt ein Leistungsschalter automatisch, wobei die Totzeit von der Stabilitätsspanne abhängig ist.

Der Erfindung liegt die Aufgabe zugrunde, ein Verfahren anzugeben, das eine besonders schnelle Wiederaufnahme der Energieübertragung im DC-System nach einem Lichtbogenfehler ermöglicht.

Diese Aufgabe wird erfindungsgemäß durch ein Verfahrer und eine Anordnung mit den Merkmalen gemäß Patentansprüche 1 bzw. 13 gelöst. Vorteilhafte Ausgestaltungen des erfindungsgemäßen Verfahrens sind in Unteransprüchen angegeben.

Danach ist erfindungsgemäß vorgesehen, dass bei Eintritt des Lichtbogenfehlers die Spannung der Spannungsquelle nicht abgeschaltet wird, sondern auf einen geringeren Spannungswert reduziert wird, der unterhalb der zur Aufrechterhaltung des Lichtbogens erforderlichen Lichtbogenbrennspannung liegt, und dass nach Beendigung des Lichtbogenfehlers die Spannung der Spannungsquelle zunächst auf eine Sollspannung, die kleiner als die Betriebsspannung ist, erhöht wird und erst anschließend von der Sollspannung auf die vorgegebene Betriebsspannung erhöht wird. (Die Sollspannung kann auch als Zwischenspannung oder als Zwischensollspannung oder als Sollzwischenspannung bezeichnet werden.)

Ein wesentlicher Vorteil des erfindungsgemäßen Verfahrens ist darin zu sehen, dass - im Unterschied zu den oben beschriebenen bekannten Verfahren - ein Wiedereinschalten der Spannung und eine Energieübertragung bereits vor Ablauf der Zeitdauer $t_{Rec}$ der dielektrischen Wiederverfestigung - nachfolgend auch kurz Wiederverfestigungszeitspanne $t_{Rec}$ genannt - (siehe Figuren 1 und 2) erfolgen kann. Dies ist möglich, weil das gasförmige Isolationsmedium, (bspw. Luft) bereits während der Wiederverfestigungszeitspanne $t_{Rec}$ eine gewisse Teilspannungsfestigkeit erreicht; diese Teilspannungsfestigkeit reicht zwar nicht zur Übertragung der Nennleistung aus, ist aber für die Übertragung einer Teilleistung geeignet. Durch das frühzeitige Übertragen einer Teilleistung können die oben erläuterten negativen Auswirkungen eines Lichtbogenfehlers auf die Energieübertragung reduziert werden.

Das Erhöhen der Spannung der Spannungsquelle auf die Sollspannung und anschließend auf die Betriebsspannung erfolgt bevorzugt im Rahmen eines Steuer- oder Regelungsverfahrens.

Bei einer besonders bevorzugten Ausgestaltung des Verfahrens erfolgt das Erhöhen der Spannung der Spannungsquelle auf die Sollspannung und anschließend auf die Betriebsspannung stufenförmig mit zumindest einer Zwischenstufe.

Vorzugsweise erfolgt das Widereinschalten unter Berücksichtigung einer Wiederverfestigungszeitspanne $t_{Rec}$, die angibt, ab wann die Betriebsspannung ohne Wiederzünden des Lichtbogens angelegt werden könnte. Eine solche Wiederverfestigungszeitspanne kann fest vorgegeben sein oder anhand von Messwerten wie Stromstärke und Lichtbogendauer ermittelt werden. Ein Ermitteln der Wiederverfestigungszeitspanne erfolgt vorzugsweise zumindest auch unter Heranziehung folgender Gleichung:

$$t_{\mathrm{Rec}} = K \int_{t0}^{t2} I^2(t)dt$$

wobei K einen Skalierungsfaktor, $t_{Rec}$ die Wiederverfestigungszeitspanne, $t_0$ den Beginn des Lichtbogenfehlers und $t_2$ das Ende des Lichtbogenfehlers bezeichnen (vgl. Fig. 1).

Das Erhöhen der Spannung der Spannungsquelle auf die Sollspannung beginnt vor Ablauf der Wiederverfestigungszeitspanne $t_{Rec}$. Als vorteilhaft wird ein Zeitraum zwischen $0{,}1 \cdot t_{Rec}$ und $0{,}5 \cdot t_{Rec}$ angesehen.

Das Erhöhen der Spannung der Spannungsquelle auf die vorgegebene Betriebsspannung erfolgt vorzugsweise derart, dass zu jedem Zeitpunkt während des Erhöhens die Spannung stets kleiner ist als die jeweilige Durchschlagspannung, die zum Wiederzünden des Lichtbogens erforderlich wäre. Die Energieübertragungspause aufgrund des Lichtbogens lässt sich bei dieser Vorgehensweise so klein wie möglich halten.

Besonders bevorzugt erfolgt das Erhöhen der Spannung der Spannungsquelle auf die vorgegebene Betriebsspannung vor Ablauf der Wiederverfestigungszeitspanne stufenförmig mit zumindest einer Sollspannung bzw. Sollspannungsstufe, die kleiner als die Betriebsspannung ist. Die Sollspannung bzw. Sollspannungsstufe ist vorzugsweise kleiner als die jeweilige Durchschlagspannung, die zum Zeitpunkt des Einschaltens der Sollspannung bzw. Sollspannungsstufe zum Wiederzünden des Lichtbogens erforderlich wäre.

Alternativ oder zusätzlich kann vorgesehen sein, dass das Erhöhen der Spannung der Spannungsquelle auf die vorgegebene Betriebsspannung unter Berücksichtigung einer fest vorgegebenen oder einer während des Lichtbogenfehlers oder nach dem Lichtbogenfehler ermittelten Wiederverfestigungscharakteristik der Fehlerstelle erfolgt.

Das Erhöhen der Spannung erfolgt bevorzugt derart, dass die Spannung der Spannungsquelle während des Erhöhens zu jedem Zeitpunkt stets kleiner ist als die jeweilige Durchschlagspannung, die zum Wiederzünden des Lichtbogens gemäß der vorgegebenen oder ermittelten Wiederverfestigungscharakteristik erforderlich wäre.

Die Wiederverfestigungscharakteristik wird vorzugsweise anhand oder zumindest auch unter Berücksichtigung des Fehlerstromes während des Lichtbogens und der Dauer des Lichtbogens ermittelt.

Vorteilhaft ist es, wenn die Wiederverfestigungscharakteristik zumindest auch eine Wiederverfestigungszeitspanne enthält oder definiert, die angibt, ab wann die Betriebsspannung ohne Wiederzünden des Lichtbogens angelegt werden kann. Wie bereits erwähnt, beginnt das Erhöhen der Spannung der Spannungsquelle vorzugsweise bereits vor Ablauf der Wiederverfestigungszeitspanne, um die Energieübertragungspause aufgrund des Lichtbogens so klein wie möglich zu halten.

Das Erhöhen der Spannung der Spannungsquelle auf die Sollspannung und anschließend auf die Betriebsspannung erfolgt vorzugsweise im Rahmen eines Steuer- oder Regelungsverfahrens. Vorteilhaft ist, wenn die Spannung der Spannungsquelle auf die vorgegebene Betriebsspannung unter Berücksichtigung einer fest vorgegebenen oder ermittelten Wiederverfestigungscharakteristik des Lichtbogens und/oder unter Berücksichtigung einer fest vorgegebenen oder ermittelten Spannungserhöhungskennlinie hochgeregelt oder hochgesteuert wird.

Um das Auftreten eines oder mehrerer weiterer Lichtbögen zu verhindern, ist es vorteilhaft, wenn das Erhöhen der Spannung der Spannungsquelle abgebrochen oder die Spannung reduziert, insbesondere abgeschaltet, wird, wenn während des Erhöhens der Spannung der Strom- und/oder Spannungsverlauf auf der elektrischen Leitung ein Wiederzünden des Lichtbogens anzeigt.

Mit Blick auf eine minimale Energieübertragungsunterbrechung im Falle eines Lichtbogens wird es als vorteilhaft angesehen, dass bei Eintritt des Lichtbogenfehlers die Spannung der Spannungsquelle nicht abgeschaltet wird, sondern auf einen geringeren Spannungswert reduziert wird, der unterhalb des zur Aufrechterhaltung des Lichtbogens erforderlichen Lichtbogenbrennspannung liegt.

Wie oben bereits erläutert, kann das Erhöhen der Spannung auf die Betriebsspannung $U_N$ stufenförmig mit einer Sollspannung oder mit mehreren Sollspannungen erfolgen. Alternativ kann auch ein stufenfreier Sollspannungsverlauf gemäß einer Sollspannungskennlinie erzeugt werden; die obigen Erläuterungen gelten für eine solche stufenfreie Ausgestaltung gemäß einer Sollspannungskennlinie entsprechend.

Die Erfindung bezieht sich außerdem auf eine Anordnung zum Übertragen elektrischer Energie mit einer elektrischen Leitung, einer mit der Leitung in Verbindung stehenden Spannungsquelle und einer mit der Spannungsquelle in Verbindung stehenden Steuereinrichtung, wobei die Steuereinrichtung derart ausgestaltet ist, dass sie im Falle eines Lichtbogenfehlers auf der Leitung eine Nothandlung zur Beendigung des Lichtbogenfehlers vornimmt und nach Beendigung des Lichtbogenfehlers mit der Spannungsquelle wieder eine vorgegebene Betriebsspannung an die elektrische Leitung anlegt.

Erfindungsgemäß sind bezüglich einer solchen Anordnung die Merkmale des Anspruchs 13 vorgesehen. Es ist vorgesehen, dass die Spannungsquelle eine regelbare oder zumindest stufenweise einstellbare Spannungsquelle ist und die Steuereinrichtung derart ausgestaltet ist, dass sie nach Beendigung des Lichtbogenfehlers die Spannung der Spannungsquelle auf die vorgegebene Betriebsspannung stetig oder stufenförmig mit zumindest einer Sollspannung, die kleiner als die Betriebsspannung ist, erhöht.

Bezüglich der Vorteile der erfindungsgemäßen Anordnung sei auf die obigen Ausführungen im Zusammenhang mit dem erfindungsgemäßen Verfahren verwiesen.

Die Erfindung wird nachfolgend anhand von Ausführungsbeispielen näher erläutert, dabei zeigen beispielhaft

Fig. 3　ein Ausführungsbeispiel für eine Anordnung zum Übertragen elektrischer Energie,

Fig. 4　ein Ausführungsbeispiel für eine Betriebsart einer Steuereinrichtung der Anordnung gemäß Fig. 3 und

Fig. 5 ein weiteres Ausführungsbeispiel für eine Betriebsart einer Steuereinrichtung der Anordnung gemäß Fig. 3.

Die Fig. 3 zeigt eine Anordnung 10 in Form einer Hochspannungs-Gleichstromübertragungseinrichtung zum Übertragen elektrischer Energie. Die Anordnung 10 umfasst eine elektrische Leitung 20, eine mit der Leitung 20 in Verbindung stehenden Spannungsquelle 30 und eine mit der Spannungsquelle 30 in Verbindung stehende Steuereinrichtung 40.

Die Spannungsquelle 30 ist eine regelbare oder steuerbare, insbesondere stufenweise oder stufenlos im Rahmen der technischen Möglichkeiten einstellbare, Spannungsquelle. Um die Steuerbarkeit und/oder Regelbarkeit der Spannungsquelle 30 besonders einfach zu ermöglichen, ist diese mit einem internen Umrichter 31 ausgestattet, der eine von einer internen Spannungsquelle 32 erzeugte interne Spannung Ui umrichten und ausgangsseitig eine vorgegebene Spannung U erzeugen kann. Die Spannung U lässt sich vorzugsweise in einem Spannungsbereich zwischen Null Volt und einer Betriebsspannung $U_N$, mit der die Leitung 10 zur Energieübertragung betrieben werden soll, beliebig einstellen. Bei dem Umrichter 31 handelt es sich beispielsweise um einen Multilevelumrichter mit Gleichspannungszwischenkreis (MMC).

Um eine Regelung der Spannung U zu ermöglichen, können eine Regelschleife oder eine Rückkopplung vorhanden sein, die aus Gründen der Übersicht in der Fig. 3 nicht dargestellt sind.

Zur Steuerung und/oder Regelung der Gleichspannungsquelle 30 dient die Steuereinrichtung 40. Die Steuereinrichtung 40 ist derart ausgestaltet, dass sie im Falle eines Lichtbogenfehlers auf der Leitung eine Nothandlung zur Beendigung des Lichtbogenfehlers vornimmt und nach Beendigung des Lichtbogenfehlers mit der Spannungsquelle 30 wieder die Betriebsspannung $U_N$ an die elektrische Leitung 10 anlegt.

Stellt die Steuereinrichtung 40 anhand des durch die Leitung 10 fließenden Stromes I und der Spannung U fest, dass ein Lichtbogenfehler LBF eingetreten ist, so wird sie die Spannungsquelle 30 mittels eines Steuersignals ST derart ansteuern, dass die Spannungsquelle 30 eine Spannung U erzeugt, die gleich Null ist oder aber zumindest die für eine Aufrechterhaltung des Lichtbogens erforderliche Lichtbogenbrennspannung unterschreitet.

Gleichzeitig und/oder danach wird sie anhand des Fehlerstromes I während des Lichtbogens und anhand der Lichtbogendauer $t_{FCR}$ vorzugsweise zumindest auch eine Wiederverfestigungszeitspanne $t_{Rec}$ ermitteln, die angibt, ab wann die Betriebsspannung $U_N$ ohne Wiederzünden des Lichtbogens wieder angelegt werden könnte. Die Wiederverfestigungszeitspanne $t_{Rec}$ kann die Steuereinrichtung 40 beispielsweise ermitteln gemäß:

$$t_{\text{Rec}} = K \int_{to}^{t2} I^2(t)dt$$

wobei K einen Skalierungsfaktor, $t_0$ den Beginn des Lichtbogenfehlers und $t_2$ das Ende des Lichtbogenfehlers bezeichnen (vgl. Fig. 1).

Um möglichst schnell wieder eine Energieübertragung über die Leitung 20 zu ermöglichen, wird die Steuereinrichtung 40 das Erhöhen der Spannung U der Spannungsquelle 30 bereits vor Ablauf der Wiederverfestigungszeitspanne $t_{Rec}$ beginnen. Um dabei ein Wiederzünden des Lichtbogens zu vermeiden, wird die Steuereinrichtung 40 die Spannung U der Spannungsquelle nicht abrupt auf die vorgegebene Betriebsspannung $U_N$ erhöhen, sondern mit zumindest einer Sollspannung Us, die kleiner als die Betriebsspannung $U_N$ ist, beginnen. (Die Sollspannung Us kann auch als Zwischenspannung Us oder als Zwischensollspannung Us oder als Sollzwischenspannung Us bezeichnet werden.)

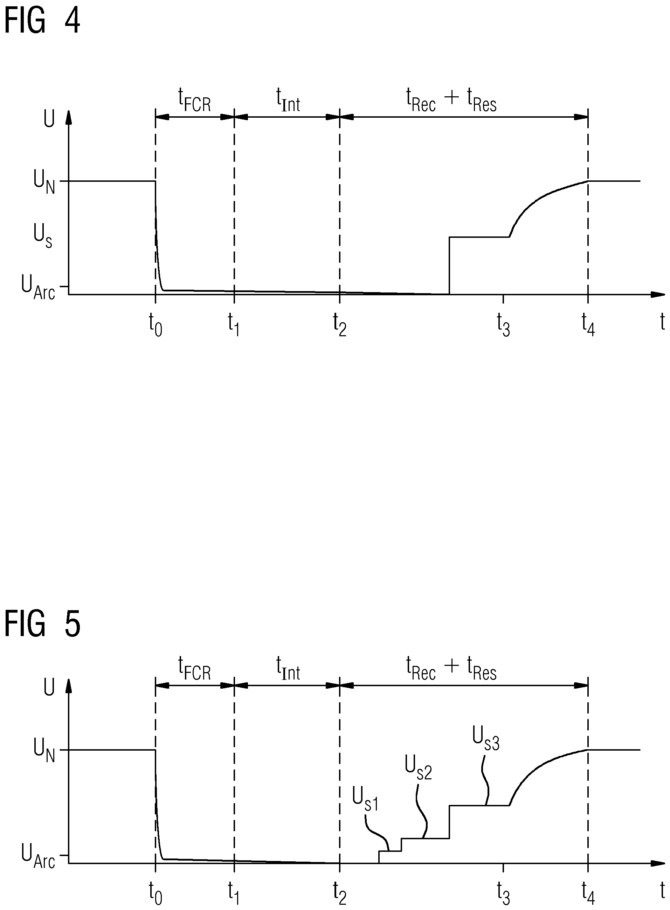

Die Fig. 4 zeigt ein Ausführungsbeispiel für ein Erhöhen der Spannung U der Spannungsquelle 30. Man erkennt, dass die Spannung zunächst stufenförmig auf die Sollspannung Us und erst anschließend stetig auf die Betriebsspannung $U_N$ erhöht wird. Das Erhöhen der Spannung U der Spannungsquelle auf die Sollspannung Us und anschließend auf die Betriebsspannung $U_N$ erfolgt bei dem Ausführungsbeispiel gemäß Fig. 4 stufenförmig mit einer Zwischenstufe bzw. Sollspannung Us.

Stellt die Steuereinrichtung 40 beim Erhöhen der Spannung U auf die Sollspannung Us anhand des Stromes I auf der Leitung 20 und/oder anhand der Spannung U fest, dass erneut ein Lichtbogen gezündet wurde, so wird sie die Spannung U der Spannungsquelle 30 wieder reduzieren, eine gewisse Zeitspanne zur Wiederherstellung der Spannungsfestigkeit der Leitung 20 abwarten und nachfolgend einen neuen Startversuch auslösen.

Die Fig. 5 zeigt ein weiteres Ausführungsbeispiel für ein Erhöhen der Spannung U der Spannungsquelle 30. Bei diesem Ausführungsbeispiel wird die Spannung U mehrstufig mit mehreren Sollspannungen Us1, Us2 und Us3 erhöht, wobei die Stufenhöhen bzw. die Werte der Sollspannungen derart gewählt sind, dass die Sollspannung zum Zeitpunkt des Einschaltens der jeweiligen Sollspannung stets kleiner ist als die jeweilige Durchschlagspannung, die zum Wiederzünden des Lichtbogens voraussichtlich erforderlich wäre.

Das Erhöhen der Spannung U der Spannungsquelle 30 auf die vorgegebene Betriebsspannung $U_N$ erfolgt vorzugsweise unter Berücksichtigung einer fest vorgegebenen oder einer während des Lichtbogenfehlers oder nach dem Lichtbogenfehler ermittelten Wiederverfestigungscharakteristik der Fehlerstelle. Die Wiederverfestigungscharakteristik kann beispielsweise unter Berücksichtigung des Integrals $\int_{t0}^{t2} I^2(t)dt$ berechnet

und/oder aus einem Speicher 41 der Steuereinrichtung 40 ausgelesen werden, in dem für eine Mehrzahl an Lichtbogenzeiten und/oder Lichtbogenströmen Wiederverfestigungscharakteristiken und/oder Wiederverfestigungszeitspannen $t_{Rec}$ beispielsweise tabellenförmig hinterlegt sein können.

Mit anderen Worten kann die Steuereinrichtung 40 gemäß Fig. 3 die dielektrische Wiederverfestigung der Isolationsstrecke der Leitung 20 in Abhängigkeit von den gemessenen elektrischen Fehlerkenngrößen (z. B. Stromstärke und Dauer des Fehlerstroms) ermitteln und diese beim Wiederanfahren des Umrichters 31 berücksichtigen. Mit der Wiederverfestigungscharakteristik als Funktion der Stromstärke und der Dauer des Fehlerstroms kann die Steuereinrichtung 40 eine Führungsgröße für das Wiederanfahren der Anordnung 10 nach einem Isolationsversagen bereitstellen.

Bei den Ausführungsbeispielen gemäß den Figuren 4 und 5 erfolgt das Erhöhen der Spannung U auf die Betriebsspannung $U_N$ stufenförmig mit einer Sollspannung Us im Falle der Figur 4 und drei Sollspannungen Us1, Us2 und Us3 im Falle der Figur 5. Alternativ können auch sehr viel mehr Sollspannungen eingestellt werden oder es kann auch ein stufenfreier Sollspannungsverlauf gemäß einer Sollspannungskennlinie erzeugt werden; die obigen Erläuterungen gelten für eine solche stufenfreie Ausgestaltung gemäß einer Sollspannungskennlinie entsprechend.

Die im Zusammenhang mit den Fig. 3 bis 5 erläuterten Ausführungsbeispiele können je nach konkreter Ausgestaltung einzelne, mehrere oder alle der folgenden Merkmale bzw. Vorteile aufweisen:

- Die Spannung des DC-Systems kann durch den oder die Umrichter nach dem Verlöschen des Lichtbogens nicht für eine konstante Totzeit auf null gehalten und erst dann sprungartig auf den Nennsollwert hochgefahren werden, sondern bereits unmittelbar nach dem Verlöschen wieder hochgeregelt (stufenweise oder stufenlos). Dabei kann der Anstieg der Systemspannung dem Verlauf der Wiederverfestigungscharakteristik der Isolationsstrecke folgen. Dadurch kann schon vor Erreichen der vollen Isolationsfestigkeit wieder eine (wenn auch reduzierte) Leistungsübertragung erfolgen.

- Die Unterbrechungsdauer muss nicht konstant sein, sondern kann variabel in Abhängigkeit der Stromstärke und der Dauer des Fehlerstroms sein.

- Der Anstieg der Spannung kann entweder stufenlos oder stufenweise erfolgen.

- Das Verfahren kann abhängig von der hinterlegten Wiederverfestigungskurve in die Spannungsregelung des Umrichters während des Wiederanfahrvorgangs eingreifen.

- Das Verfahren kann abhängig von einer Echtzeitmessung des Stroms und der Spannung auf die Spannungsregelung des Umrichters während des Wiederanfahrvorgangs eingreifen.

- Das Verfahren ist vorzugsweise in der Lage, durch die Analyse des Stroms und der Systemspannung während des Wiederanfahrens des DC-Systems mögliche Wiederzündungen automatisch zu detektieren und den Anfahrprozess nach einer weiteren Wartezeit erneut zu starten.

- Weiterhin lässt es das Verfahren zu, wiederum in Abhängigkeit von der Stromstärke und der Dauer des Fehlerstroms, einen Wert für die Systemspannung zu bestimmen, unterhalb dessen ein freibrennender Lichtbogen, der bei einem Isolationsfehler entsteht, selbsttätig verlischt. Mit der Möglichkeit von Vollbrückenumrichtern, die Spannung variabel zu regeln, kann dieser Wert als Sollwert vorgegeben werden, so dass die Systemspannung zur Fehlerklärung nicht vollständig heruntergeregelt werden muss.

- Im Fall eines Isolationsfehlers kann kurzzeitig sogar das gesamte DC-System heruntergefahren werden, um ohne den Einsatz von DC-Leistungsschaltern Isolationsfehler zu löschen. Da die Unterbrechungsdauer des Systems aufgrund der Eigenschaften des Verfahrens minimal ist und Werte deutlich kleiner als die heutzutage festgelegten ca. 0,4 s aufweist, werden auch die Auswirkungen auf die angeschlossenen AC-Systeme gering sein. Da auf diese Weise Fehler nicht selektiv erkannt werden müssen, verkürzt sich insbesondere auch die Detektionszeit bis zum Auslösen. Dies ermöglicht ggf. eine verkürzte Unterbrechungsdauer der Leistungsübertragung gegenüber der Variante mit DC-Leistungsschaltern.

- Durch das beispielhaft beschriebene Verfahren wird eine Möglichkeit geschaffen, ein gasisoliertes DC-System mit einer beliebigen Anzahl angeschlossener Stationen nach einem Isolationsversagen unter Berücksichtigung der Fehlerdauer und der dielektrischen Wiederverfestigung des Isoliermediums automatisch und schnellstmöglich wiederanzufahren, so dass die Unterbrechungsdauer der Leistungsübertragung auf diesem DC-System gegenüber der bestehenden Praxis (Abwarten einer festen Totzeit) erheblich reduziert werden kann, und somit die Systemstabilität von elektrischen Übertragungsnetzen verbessert werden kann.

- Durch die Möglichkeiten des Verfahrens kann außerdem auf DC-Leistungsschalter verzichtet werden, da das Verfahren die Regelbarkeit der Vollbrücken-Umrichter verwenden kann, um Fehlerströme unmittelbar zu unterbrechen. Das Verfahren erlaubt unter Ausnutzung der schnellen Regelbarkeit von VSC-Umrichtern in Vollbrücken-Topologie, durch ein unverzügliches Ausschalten der Umrichter, den Energieeintrag in die Fehlerstelle zu reduzieren und so die Unterbrechungszeit $t_{Rec}$ zu verkürzen. Damit wird erstmals ein flexibles Verfahren zur Fehlerbehandlung in zukünftigen DC-Übertragungssystemen eingeführt, das einen Systembetrieb unter Minimierung der Unterbrechung der Leistungsübertragung im Fehlerfall gewährleistet. Die Verfügbarkeit dieses Verfahrens beseitigt eine zentrale Hemmschwelle für den Einsatz vermaschter DC-Übertragungssysteme.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Literatur

[1] Ahmed, N. et al.: "Prospects and Challenges of Future HVDC SuperGrids with Modular Multilevel Converters", Proceedings of the 2011-14th European Conference on Power Electronics and Applications, Birmingham 2011
[2] Davies, M., Dommaschk, M., Dorn, J., Lang, J., Retzmann, D., Soerangr, D.: "HVDC PLUS - Basics and Principle of Operation", Siemens AG 2009
[3] Krishnayya, P. et al.: "Simulator study of multiterminal HVDC system with smal parallel tap and weak systems", IEEE Transactions on Power Apparatus and Systems, Vol. PAS-103, No. 10, October 1984
[4] Lesch, G.: "Lehrbuch der Hochspannungstechnik", Springer Verlag Berlin Göttingen Heidelberg 1959
[5] Sirotinski, L.: "Hochspannungstechnik - Band 1 - Teil 1: Gasentladungen", VEB Verlag Technik Berlin 1955
[6] Netzentwicklungsplan 2013
[7] Schwab, A.: "Elektroenergiesysteme", Springer Verlag Berlin, 2006

Bezugszeichenliste

| 10 | Anordnung |
|----|-----------|
| 20 | Leitung |
| 30 | Spannungsquelle |
| 31 | Umrichter |
| 32 | Gleichspannungsquelle |
| 40 | Steuereinrichtung |
| 41 | Speicher |

| I | Strom |
|---|-------|
| L | Lichtbogenfehler |
| ST | Steuersignal |
| U | Spannung |
| $U_i$ | interne Spannung |
| UN | Betriebsspannung |
| Us | Sollspannung |
| Us1 | Sollspannung |
| Us2 | Sollspannung |
| Us3 | Sollspannung |

## Patentansprüche

1. Verfahren zum Übertragen elektrischer Energie über eine elektrische Leitung (20), wobei im Falle eines Lichtbogenfehlers (LBF) auf der Leitung (20) eine Nothandlung zur Beendigung des Lichtbogenfehlers (LBF) vorgenommen wird und nach Beendigung des Lichtbogenfehlers (LBF) mit einer mit der Leitung (20) in Verbindung stehenden Spannungsquelle (30) wieder eine vorgegebene Betriebsspannung ($U_N$) an die elektrische Leitung (20) angelegt wird, wobei

    - nach Beendigung des Lichtbogenfehlers (LBF) die Spannung (U) der Spannungsquelle (30) zunächst auf eine Sollspannung (Us, Us1, Us2, Us3), die kleiner als die Betriebsspannung (UN) ist, erhöht wird und erst anschließend von der Sollspannung (Us, Us1, Us2, Us3) auf die vorgegebene Betriebsspannung (UN) erhöht wird,

    **dadurch gekennzeichnet, dass**

    - bei Eintritt des Lichtbogenfehlers (LBF) die Spannung (U) der spannungsquelle (30) nicht abgeschaltet wird, sondern auf einen geringeren Spannungswert reduziert wird, der unterhalb der zur Aufrechterhaltung des Lichtbogens erforderlichen Lichtbogenbrennspannung liegt,
    - eine Wiederverfestigungszeitspanne vorgegeben ist oder ermittelt wird, die angibt, ab wann die Betriebsspannung ($U_N$) ohne Wiederzünden des Lichtbogens angelegt werden könnte, und
    - das Erhöhen der Spannung (U) der Spannungsquelle (30) auf die Sollspannung vor Ablauf der Wiederverfestigungszeitspanne beginnt.

2. Verfahren nach Anspruch 1,
    **dadurch gekennzeichnet, dass** das Erhöhen der Spannung (U) der Spannungsquelle (30) auf die Sollspannung (Us, Us1, Us2, Us3) und anschließend auf die Betriebsspannung ($U_N$) im Rahmen eines Steuer- oder Regelungsverfahrens erfolgt.

3. Verfahren nach einem der voranstehenden Ansprüche,
    **dadurch gekennzeichnet, dass** das Erhöhen der Spannung (U) der Spannungsquelle (30) auf die Sollspannung (Us, Us1, Us2, Us3) und anschließend auf die Betriebsspannung ($U_N$) stufenförmig mit zumindest einer Zwischenstufe erfolgt.

4. Verfahren nach einem der voranstehenden Ansprüche,

**dadurch gekennzeichnet, dass** das Erhöhen der Spannung (U) der Spannungsquelle (30) auf die vorgegebene Betriebsspannung (U_N) derart erfolgt, dass zu jedem Zeitpunkt während des Erhöhens die Spannung (U) stets kleiner ist als die jeweilige Zündspannung, die zum Wiederzünden des Lichtbogens erforderlich wäre.

5. Verfahren nach einem der voranstehenden Ansprüche,

   **dadurch gekennzeichnet, dass** das Erhöhen der Spannung (U) der Spannungsquelle (30) auf die vorgegebene Betriebsspannung (U_N) vor Ablauf der Wiederverfestigungszeitspanne stufenförmig mit zumindest einer Sollspannung (Us, Us1, Us2, Us3) erfolgt, wobei die Sollspannung (Us, Us1, Us2, Us3) zum Zeitpunkt des Einschaltens der Sollspannung (Us, Us1, Us2, Us3) kleiner ist als die jeweilige Durchschlagspannung, die zum Wiederzünden des Lichtbogens erforderlich wäre.

6. Verfahren nach einem der voranstehenden Ansprüche,

   **dadurch gekennzeichnet, dass** das Erhöhen der Spannung (U) der Spannungsquelle (30) auf die vorgegebene Betriebsspannung (U_N) unter Berücksichtigung einer fest vorgegebenen oder einer während des Lichtbogenfehlers (LBF) oder nach dem Lichtbogenfehler (LBF) ermittelten Wiederverfestigungscharakteristik der Fehlerstelle erfolgt.

7. Verfahren nach Anspruch 6,

   **dadurch gekennzeichnet, dass** das Erhöhen der Spannung (U) derart erfolgt, dass die Spannung (U) der Spannungsquelle (30) während des Erhöhens zu jedem Zeitpunkt stets kleiner ist als die jeweilige Durchschlagspannung, die zum Wiederzünden des Lichtbogens gemäß der vorgegebenen oder ermittelten Wiederverfestigungscharakteristik erforderlich wäre.

8. Verfahren nach einem der voranstehenden Ansprüche 6-7,

   **dadurch gekennzeichnet, dass** die Wiederverfestigungscharakteristik anhand oder zumindest auch unter Berücksichtigung des Fehlerstromes während des Lichtbogens und der Dauer des Lichtbogens ermittelt wird.

9. Verfahren nach einem der voranstehenden Ansprüche 6-8,

   **dadurch gekennzeichnet, dass** die Wiederverfestigungscharakteristik zumindest auch eine Wiederverfestigungszeitspanne enthält oder definiert, die angibt, ab wann die Betriebsspannung (U_N) ohne Wiederzünden des Lichtbogens angelegt werden kann.

10. Verfahren nach Anspruch 9,

    **dadurch gekennzeichnet, dass** das Erhöhen der Spannung (U) der Spannungsquelle (30) vor Ablauf der Wiederverfestigungszeitspanne beginnt.

11. Verfahren nach einem der voranstehenden Ansprüche 6-10,

    **dadurch gekennzeichnet, dass** die Spannung (U) der spannungsquelle (30) auf die vorgegebene Betriebsspannung (U_N) unter Berücksichtigung einer fest vorgegebenen oder ermittelten Wiederverfestigungscharakteristik des Lichtbogens hochgeregelt oder hochgesteuert wird.

12. Verfahren nach einem der voranstehenden Ansprüche,

    **dadurch gekennzeichnet, dass** das Erhöhen der Spannung (U) der Spannungsquelle (30) abgebrochen oder die Spannung (U) reduziert, insbesondere abgeschaltet, wird, wenn während des Erhöhens der Spannung (U) der Strom- und/oder Spannungsverlauf auf der elektrischen Leitung (20) ein Wiederzünden des Lichtbogens anzeigt.

13. Anordnung zum Übertragen elektrischer Energie mit

    - einer elektrischen Leitung (20),
    - einer mit der Leitung (20) in Verbindung stehenden Spannungsquelle (30) und
    - einer mit der spannungsquelle (30) in Verbindung stehenden Steuereinrichtung (40),
    - wobei die Steuereinrichtung (40) derart ausgestaltet ist, dass sie im Falle eines Lichtbogenfehlers (LBF) auf der Leitung (20) eine Nothandlung zur Beendigung des Lichtbogenfehlers (LBF) vornimmt und nach Beendigung des Lichtbogenfehlers (LBF) mit der Spannungsquelle (30) wieder eine vorgegebene Betriebsspannung (U_N) an die elektrische Leitung (20) anlegt,
    - die Spannungsquelle (30) eine regelbare oder zumindest stufenweise einstellbare Spannungsquelle (30) ist und
    - die Steuereinrichtung (40) derart ausgestaltet ist, dass sie nach Beendigung des Lichtbogenfehlers (LBF) die Spannung (U) der Spannungsquelle (30) zunächst auf eine Sollspannung (Us, Us1, Us2, Us3), die kleiner als die Betriebsspannung (U_N) ist, erhöht und erst anschließend von der Sollspannung (Us, Us1, Us2, Us3) auf die vorgegebene Betriebsspannung (U_N) erhöht,

    **dadurch gekennzeichnet, dass** die Steuereinrichtung (40) derart ausgestaltet ist, dass

    - bei Eintritt des Lichtbogenfehlers (LBF) die Spannung (U) der Spannungsquelle (30) nicht abgeschaltet wird, sondern auf einen geringeren Spannungswert reduziert wird, der unterhalb der zur Aufrechterhaltung des Lichtbogens erforderlichen Lichtbogenbrennspannung liegt,
- eine Wiederverfestigungszeitspanne vorgegeben ist oder ermittelt wird, die angibt, ab wann die Betriebsspannung (UN) ohne Wiederzünden des Lichtbogens angelegt werden könnte, und
- das Erhöhen der Spannung (U) der Spannungsquelle (30) auf die Sollspannung vor Ablauf der Wiederverfestigungszeitspanne beginnt.

**Claims**

1. Method for transmitting electrical energy via an electrical line (20), wherein, in the event of an arc fault (LBF) on the line (20), emergency action is taken to end the arc fault (LBF) and, after the arc fault (LBF) has ended, a predefined operating voltage ($U_N$) is again applied to the electrical line (20) using a voltage source (30) connected to the line (20), wherein

   - after the arc fault (LBF) has ended, the voltage (U) of the voltage source (30) is first increased to a target voltage (Us, Us1, Us2, Us3) that is lower than the operating voltage ($U_N$), and only then is increased from the target voltage (Us, Us1, Us2, Us3) to the predefined operating voltage ($U_N$),

   **characterized in that**,

   - when the arc fault (LBF) occurs, the voltage (U) of the voltage source (30) is not switched off, but is rather reduced to a lower voltage value that is below the arc voltage necessary to maintain the arc,
   - a dielectric recovery time period is predefined or is determined and indicates the time from which the operating voltage ($U_N$) could be applied without restriking the arc, and
   - increasing the voltage (U) of the voltage source (30) to the target voltage begins before the dielectric recovery time period elapses.

2. Method according to Claim 1,
   **characterized in that**
   the voltage (U) of the voltage source (30) is increased to the operating voltage ($U_N$) in the course of a control or regulation method.

3. Method according to either of the preceding claims,
   **characterized in that**
   the voltage (U) of the voltage source (30) is increased to the target voltage (Us, Us1, Us2, Us3) and then to the operating voltage ($U_N$) in stages, with at least one intermediate stage.

4. Method according to one of the preceding claims,
   **characterized in that**
   the voltage (U) of the voltage source (30) is increased to the predefined operating voltage ($U_N$) in such a way that, at any time during the increasing process, the voltage (U) is always lower than the respective striking voltage that would be necessary to restrike the arc.

5. Method according to one of the preceding claims,
   **characterized in that**
   the voltage (U) of the voltage source (30) is increased to the predefined operating voltage ($U_N$) before the dielectric recovery time period elapses in stages with at least one target voltage (Us, Us1, Us2, Us3), wherein the target voltage (Us, Us1, Us2, Us3), at the time at which the target voltage (Us, Us1, Us2, Us3) is switched on, is lower than the respective breakdown voltage that would be necessary to restrike the arc.

6. Method according to one of the preceding claims,
   **characterized in that**
   the voltage (U) of the voltage source (30) is increased to the predefined operating voltage ($U_N$), taking into account a dielectric recovery characteristic of the fault location that is firmly predefined or determined during the arc fault (LBF) or after the arc fault (LBF).

7. Method according to Claim 6,
   **characterized in that**
   the voltage (U) is increased in such a way that, at any time during the increasing process, the voltage (U) of the voltage source (30) is always lower than the respective breakdown voltage that would be necessary to restrike the arc in accordance with the predefined or determined dielectric recovery characteristic.

8. Method according to either of the preceding Claims 6 and 7,
   **characterized in that**
   the dielectric recovery characteristic is determined on the basis of, or at least also taking into account, the fault current during the arc and the duration of the arc.

9. Method according to one of the preceding Claims 6 to 8,
   **characterized in that**
   the dielectric recovery characteristic includes or defines at least also a dielectric recovery time period that indicates the time from which the operating voltage ($U_N$) can be applied without restriking the arc.

**10.** Method according to Claim 9,
**characterized in that**
increasing the voltage (U) of the voltage source (30) begins before the dielectric recovery time period elapses.

**11.** Method according to one of the preceding Claims 6 to 10,
**characterized in that**
the voltage (U) of the voltage source (30) is regulated or controlled upwards to the predefined operating voltage ($U_N$),
taking into account a firmly predefined or determined dielectric recovery characteristic of the arc.

**12.** Method according to one of the preceding claims,
**characterized in that**
increasing the voltage (U) of the voltage source (30) is interrupted or the voltage (U) is reduced, in particular switched off, if the current and/or voltage profile on the electrical line (20) indicates restriking of the arc while the voltage (U) is being increased.

**13.** Arrangement for transmitting electrical energy, having

- an electrical line (20),
- a voltage source (30) connected to the line (20), and
- a control device (40) connected to the voltage source (30),
- wherein the control device (40) is configured in such a way that, in the event of an arc fault (LBF) on the line (20), it takes emergency action to end the arc fault (LBF) and, after the arc fault (LBF) has ended, again applies a predefined operating voltage ($U_N$) to the electrical line (20) using the voltage source (30),
- the voltage source (30) is a voltage source (30) that is regulatable or at least adjustable in a stepwise manner, and
- the control device (40) is configured in such a way that, after the arc fault (LBF) has ended, it first increases the voltage (U) of the voltage source (30) to a target voltage (Us, Us1, Us2, Us3) that is lower than the operating voltage ($U_N$), and only then increases it from the target voltage (Us, Us1, Us2, Us3) to the predefined operating voltage ($U_N$),

**characterized in that**
the control device (40) is configured in such a way that

- when the arc fault (LBF) occurs, the voltage (U) of the voltage source (30) is not switched off, but is rather reduced to a lower voltage value that is below the arc voltage necessary to maintain the arc,
- a dielectric recovery time period is predefined or is determined and indicates the time from which the operating voltage ($U_N$) could be applied without restriking the arc, and
- increasing the voltage (U) of the voltage source (30) to the target voltage begins before the dielectric recovery time period elapses.

**Revendications**

**1.** Procédé de transport d'énergie électrique par une ligne (20) électrique, dans lequel dans le cas d'un défaut (LBF) d'arc électrique sur la ligne (20) on effectue une manipulation d'urgence pour mettre fin au défaut (LBF) d'arc électrique et, après avoir mis fin au défaut (LBF) d'arc électrique, on réapplique une tension ($U_N$) de fonctionnement donnée à l'avance à la ligne (20) électrique par une source (30) de tension en liaison avec la ligne (20), dans lequel

- après avoir mis fin au défaut (LBF) d'arc électrique, on élève la tension (U) de la source (30) de tension d'abord à une tension (Us, Us1, Us2, Us3) de consigne, qui est plus basse que la tension ($U_N$) de fonctionnement, et seulement ensuite on élève de la tension (Us, Us1, Us2, Us3) de consigne à la tension ($U_N$) de fonctionnement donnée à l'avance,

**caractérisé en ce que**

- à l'apparition du défaut (LBF) d'arc électrique, on n'interrompt pas la tension (U) de la source (30) de tension, mais on la réduit à une valeur de tension plus basse, qui est en dessous de la tension d'arc électrique nécessaire pour le maintien de l'arc électrique,
- il est prescrit ou on détermine un laps de temps de reconsolidation, qui indique à partir de quand la tension ($U_N$) de fonctionnement pourrait être appliquée sans réamorçage de l'arc électrique, et
- on fait commencer l'élévation de la tension (U) de la source (30) de tension à la tension de consigne avant l'expiration du laps de temps de reconsolidation.

**2.** Procédé suivant la revendication 1,
**caractérisé en ce que**
l'élévation de la tension (U) de la source (30) de tension à la tension (Us, Us1, Us2, Us3) de consigne et ensuite à la tension ($U_N$) de fonctionnement s'effectue dans le cadre d'un procédé de commande ou de régulation.

**3.** Procédé suivant l'une des revendications précédentes,
**caractérisé en ce que**
l'élévation de la tension (U) de la source (30) de tension à la tension (Us, Us1, Us2, Us3) de consigne et ensuite à la tension ($U_N$) de fonctionnement s'effectue par palier avec au moins un palier intermédiaire.

**4.** Procédé suivant l'une des revendications précédentes,
**caractérisé en ce que**
l'élévation de la tension (U) de la source (30) de tension à la tension ($U_N$) de fonctionnement donnée à l'avance s'effectue de manière à ce qu'à chaque instant pendant l'élévation, la tension (U) soit toujours plus basse que la tension d'amorçage respective, qui serait nécessaire pour le réamorçage de l'arc électrique.

**5.** Procédé suivant l'une des revendications précédentes,
**caractérisé en ce que**
l'élévation de la tension (U) de la source (30) de tension à la tension ($U_N$) de fonctionnement donnée à l'avance s'effectue avant l'expiration du laps de temps de reconsolidation par palier en ayant au moins une tension (Us, Us1, Us2, Us3) de consigne, la tension (Us, Us1, Us2, Us3) de consigne étant à l'instant de l'application de la tension (Us, Us1, Us2, Us3) de consigne plus basse que la tension de claquage respective, qui serait nécessaire pour le réamorçage de l'arc électrique.

**6.** Procédé suivant l'une des revendications précédentes,
**caractérisé en ce que**
l'élévation de la tension (U) de la source (30) de tension à la tension ($U_N$) de fonctionnement donnée à l'avance s'effectue en tenant compte d'une caractéristique de reconsolidation du point de défaut, donnée à l'avance de manière fixe ou déterminée pendant le défaut (LBF) de l'arc électrique ou après le défaut (LBF) de l'arc électrique.

**7.** Procédé suivant la revendication 6,
**caractérisé en ce que**
l'élévation de la tension (U) s'effectue de manière à ce que la tension (U) de la source (30) de tension soit pendant l'élévation à tout instant toujours plus basse que la tension respective de claquage, qui serait nécessaire pour le réamorçage de l'arc électrique suivant la caractéristique de reconsolidation donnée à l'avance ou déterminée.

**8.** Procédé suivant l'une des revendications 6 à 7 précédentes, **caractérisé en ce que**
l'on détermine la caractéristique de reconsolidation à l'aide ou au moins également en tenant compte du courant de défaut pendant l'arc électrique et de la durée de l'arc électrique.

**9.** Procédé suivant l'une des revendications 6 à 8 précédentes, **caractérisé en ce que**
la caractéristique de reconsolidation contient ou définit au moins également un laps de temps de reconsolidation, qui indique à partir de quand la tension ($U_N$) de fonctionnement peut être appliquée sans réamorcer l'arc électrique.

**10.** Procédé suivant la revendication 9,
**caractérisé en ce que**
l'élévation de la tension (U) de la source (30) de tension commence avant l'expiration du laps de temps de reconsolidation.

**11.** Procédé suivant l'une des revendications 6 à 10 précédentes, **caractérisé en ce que**
on règle vers le haut ou on commande vers le haut la tension (U) de la source (30) de tension à la tension ($U_N$) de fonctionnement donnée à l'avance en tenant compte d'une caractéristique de reconsolidation de l'arc électrique donnée à l'avance de manière fixe ou déterminée.

**12.** Procédé suivant l'une des revendications précédentes, **caractérisé en ce que**
l'on interrompt l'élévation de la tension (U) de la source (30) de tension ou on réduit la tension (U), notamment en l'interrompant, si pendant l'élévation de la tension (U), la courbe de courant et/ou de tension sur la ligne (20) électrique indique un réamorçage de l'arc électrique.

**13.** Montage de transport d'énergie électrique comprenant

- une ligne (20) électrique,
- une source (30) de tension en liaison avec la ligne (20) et
- un dispositif (40) de commande en liaison avec la source (30) de tension,
- dans lequel le dispositif (40) de commande est conformé de manière à effectuer, dans le cas d'un défaut (LBF) d'arc électrique sur la ligne (20) une manipulation d'urgence pour mettre fin au défaut (LBF) d'arc électrique et après qu'il a été mis fin au défaut (LBF) d'arc électrique pour appliquer par la source (30) de tension à nouveau une tension ($U_N$) de fonctionnement donnée à l'avance à la ligne (20) électrique,
- la source (30) de tension est une source (30) de tension réglable ou au moins réglable par palier, et
- le dispositif (40) de commande est conformé de manière à élever, après qu'il a été mis fin au défaut (LBF) d'arc électrique, la tension (U) de la source (30) de tension d'abord à une tension (Us, Us1, Us2, Us3) de consigne, qui est plus basse que la tension ($U_N$) de fonctionnement, et seulement ensuite à l'élever de la tension (Us, Us1, Us2, Us3) de consigne à la tension ($U_N$) de fonctionnement donnée à l'avance,

**caractérisé en ce que**
le dispositif (40) de commande est conformé de manière à ce que

- à l'apparition du défaut (LBF) d'arc électrique, on n'interrompe pas la tension (U) de la source (30) de tension mais on la réduit à une valeur de tension plus basse, qui est en dessous de la tension d'arc électrique nécessaire pour le maintien de l'arc électrique,
- il est prescrit ou on détermine un laps de temps de reconsolidation, qui indique à partir de quand la tension ($U_N$) de fonctionnement pourrait être appliquée sans réamorçage de l'arc électrique, et
- on fait commencer l'élévation de la tension (U) de la source (30) de tension à la tension de consigne avant l'expiration du laps de temps de reconsolidation.

## FIG 1

## FIG 2

## FIG 3

## FIG 4

## FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2013174726 A1
- US 2014049865 A1
- US 5805400 A

### In der Beschreibung aufgeführte Nicht-Patentliteratur

- **AHMED, N et al.** Prospects and Challenges of Future HVDC SuperGrids with Modular Multilevel Converters. *Proceedings of the 2011-14th European Conference on Power Electronics and Applications, Birmingham,* 2011
- **DAVIES, M. ; DOMMASCHK, M. ; DORN, J. ; LANG, J. ; RETZMANN, D. ; SOERANGR, D.** *HVDC PLUS - Basics and Principle of Operation,* 2009
- **KRISHNAYYA, P. et al.** Simulator study of multiterminal HVDC system with smal parallel tap and weak systems. *IEEE Transactions on Power Apparatus and Systems,* Oktober 1984, vol. PAS-103 (10
- **LESCH, G.** Lehrbuch der Hochspannungstechnik. Springer Verlag, 1959
- **SIROTINSKI, L.** Hochspannungstechnik. VEB Verlag Technik, 1955, vol. 1
- **SCHWAB, A.** Elektroenergiesysteme. Springer Verlag, 2006